(19) Europäisches Patentamt
European Patent Office
Office européen des brevets

(11) **EP 4 535 480 A1**

(12) **EUROPEAN PATENT APPLICATION**
published in accordance with Art. 153(4) EPC

(43) Date of publication:
**09.04.2025 Bulletin 2025/15**

(21) Application number: **23815980.0**

(22) Date of filing: **26.05.2023**

(51) International Patent Classification (IPC):
*H01M 10/052* (2010.01)     *H01M 4/134* (2010.01)
*H01M 10/0568* (2010.01)     *H01M 10/058* (2010.01)
*H01M 50/451* (2021.01)     *H01M 50/457* (2021.01)
*H01M 50/46* (2021.01)     *H01M 50/463* (2021.01)
*H01M 50/489* (2021.01)

(52) Cooperative Patent Classification (CPC):
**H01M 4/134; H01M 10/052; H01M 10/0568;
H01M 10/058; H01M 50/451; H01M 50/457;
H01M 50/46; H01M 50/463; H01M 50/489;
Y02E 60/10**

(86) International application number:
**PCT/JP2023/019780**

(87) International publication number:
**WO 2023/234223 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 JP 2022088860**

(71) Applicant: **Panasonic Intellectual Property
Management Co., Ltd.
Kadoma-shi, Osaka 571-0057 (JP)**

(72) Inventors:
• **MIYAMAE Ryohei**
  **Kadoma-shi, Osaka 571-0057 (JP)**
• **KANO Akira**
  **Kadoma-shi, Osaka 571-0057 (JP)**
• **KONDO Shinichiro**
  **Kadoma-shi, Osaka 571-0057 (JP)**

(74) Representative: **Novagraaf International SA
Chemin de l'Echo 3
1213 Onex, Geneva (CH)**

(54) **LITHIUM SECONDARY BATTERY AND COMPOSITE MEMBER**

(57) Disclosed is a lithium secondary battery including: a positive electrode; a negative electrode; a separator provided between the positive electrode and the negative electrode; and a lithium ion-conductive non-aqueous electrolyte. The negative electrode is an electrode on which lithium metal deposits during charge and the lithium metal dissolves during discharge. A first spacer is provided between the negative electrode and the separator, and a second spacer is provided between the positive electrode and the separator.

FIG. 2(a)     FIG. 2(b)

**Description**

[Technical Field]

The present disclosure relates to a lithium secondary battery and a composite member.

[Background Art]

Non-aqueous electrolyte secondary batteries are used in applications such as information and communication technology (ICT) applications including personal computers and smartphones, automotive applications, and power storage applications. The non-aqueous electrolyte secondary batteries for these applications are required to have an further higher capacity. As high capacity non-aqueous electrolyte secondary batteries, lithium ion batteries are known. A high-capacity lithium ion battery can be achieved by using, as negative electrode active materials, for example, graphite and an alloy active material such as a silicon compound in combination. However, increasing the lithium ion battery capacity is reaching its limit.

As non-aqueous electrolyte secondary batteries with a capacity higher than that of lithium ion batteries, lithium secondary batteries (lithium metal secondary batteries) are considered as promising. In a lithium secondary battery, lithium metal deposits on the negative electrode during charge, and the lithium metal dissolves into the non-aqueous electrolyte during discharge. Conventionally, various proposals have been made for lithium secondary batteries.

Patent Literature 1 discloses a lithium secondary battery including: a positive electrode that contains a lithium-containing positive electrode active material; a negative electrode that is provided to face the positive electrode, and includes a negative electrode current collector; a separator provided between the positive electrode and the negative electrode; and a lithium ion-conductive non-aqueous electrolyte, wherein the negative electrode current collector includes: a layer having a first surface and a second surface that is opposite to the first surface; a plurality of first protrusions that protrude from the first surface; and a plurality of second protrusions that protrude from the second surface, wherein lithium metal deposits on the first surface and the second surface during charge, and a total area of portions where the plurality of first protrusions and the plurality of second protrusions overlap each other when viewed from the normal direction of the first surface is 1/2 or less of a total area of the plurality of first protrusions.

[Citation List]

[Patent Literature]

[PTL 1] Japanese Laid-Open Patent Publication No. 2019-212603

[Summary of Invention]

[Technical Problem]

Lithium secondary batteries with improved cycle characteristics are required.

[Solution to Problem]

An aspect of the present disclosure relates to a lithium secondary battery including: a positive electrode; a negative electrode; a separator provided between the positive electrode and the negative electrode; and a lithium ion-conductive non-aqueous electrolyte, wherein the negative electrode is an electrode on which lithium metal deposits during charge and the lithium metal dissolves during discharge, a first spacer is provided between the negative electrode and the separator, and a second spacer is provided between the positive electrode and the separator..

Also, another aspect of the present disclosure relates to a composite member including: a separator that has a first main surface and a second main surface that is opposite to the first main surface; a first spacer provided on the first main surface; and a second spacer provided on the second main surface, wherein T1/T2 that is a ratio of a thickness T1 of the first spacer relative to a thickness T2 of the second spacer is 1 or more.

[Advantageous Effects of Invention]

According to the present disclosure, it is possible to enhance the cycle characteristics of the lithium secondary battery.

Novel features of the present invention are set forth in the appended claims. However, the present invention will be well understood from the following detailed description of the present invention with reference to the drawings, in terms of both the configuration and the content together with other objects and features of the present invention.

[Brief Description of Drawings]

[FIG. 1] FIG. 1 is a vertical cross-sectional view schematically showing an example of a lithium secondary battery according to an embodiment of the present disclosure.

[FIG. 2] FIG. 2 is a cross-sectional view schematically showing a main part of an electrode group included in the lithium secondary battery according to the embodiment of the present disclosure, with FIG. 2(a) and FIG. 2(b) showing the main part of the electrode group during discharge and during charge, respectively.

[FIG. 3] FIG. 3 is a top view showing an example of a pattern of a first spacer.

[FIG. 4] FIG. 4 is a partially enlarged view of FIG. 3.

[FIG. 5] FIG. 5 is a top view showing another example of the pattern of the first spacer.

[FIG. 6] FIG. 6 is a cross-sectional view schematically showing a main part of an electrode group in which a first spacer is provided without providing a second spacer, with FIG. 6(a) and FIG. 6(b) showing the main part of the electrode group during discharge and during charge, respectively.

[FIG. 7] FIG. 7 is a cross-sectional view schematically showing a main part of an electrode group in which a second spacer is provided without providing a first spacer, with FIG. 7(a) and FIG. 7(b) showing the main part of the electrode group during discharge and during charge, respectively.

[FIG. 8] FIG. 8 is a schematic cross-sectional view of a main part of an example of a composite member composed of a separator, a first spacer, and a second spacer.

[Description of Embodiment]

Hereinafter, an embodiment of the present disclosure will be described by way of examples. However, the present disclosure is not limited to the examples described below. In the following description, specific numerical values, materials, and the like may be listed as examples. However, other numerical values, materials, and the like may also be used as long as the advantageous effects of the present disclosure can be obtained. As constituent elements other than the characteristic features of the present disclosure, known secondary battery constituent elements may be used. In the specification of the present application, the expression "a range of a numerical value A to a numerical value B" encompasses that the range includes the numerical value A and the numerical value B. In the following description, lower and upper limits of numerical values of specific physical properties, conditions, and the like will be shown as examples. The lower limits and the upper limits shown below can be combined in any way as long as the lower limits are not greater than or equal to the upper limits. In the case where a plurality of materials are listed as examples, only one material may be selected from among the plurality of materials and used, or a combination of two or more may be selected from among the plurality of materials and used.

The present disclosure encompasses a combination of features defined in two or more claims arbitrarily selected from a plurality of claims recited in the appended claims of the present application. That is, features defined in two or more claims arbitrarily selected from a plurality of claims recited in the appended claims of the present application can be combined as long as they do not technically contradict to each other. In addition, the drawings attached to the present application are schematic representations, and thus the shape or feature of each structural component illustrated in the drawings do not necessarily reflect the actual scale, and thus is not necessarily shown in the same scale.

A lithium secondary battery according to an embodiment of the present disclosure includes: a positive electrode; a negative electrode; a separator provided between the positive electrode and the negative electrode; and a lithium ion-conductive non-aqueous electrolyte. The negative electrode is an electrode on which lithium metal deposits during charge and the lithium metal dissolves during discharge.

In the lithium secondary battery, for example, 70% or more of the rated capacity is exhibited by deposition and dissolution of lithium metal. Electron transfer in the negative electrode during charge and during discharge is enabled mainly by deposition and dissolution of lithium metal in the negative electrode. Specifically, 70 to 100% (for example, 80 to 100% or 90 to 100%) of electron transfer (from another perspective, current) in the negative electrode during charge and during discharge is enabled by deposition and dissolution of lithium metal. That is, the negative electrode of the present disclosure is different from a negative electrode in which electron transfer in the negative electrode during charge and during discharge is enabled mainly by absorption and desorption of lithium ions by the negative electrode active material (graphite or the like).

Hereinafter, a group of a positive electrode, a negative electrode, and a separator may also be referred to as "electrode group". The electrode group may be a wound-type electrode group or a stack-type electrode group. The wound-type electrode group is formed by spirally winding a strip-shaped positive electrode and a strip-shaped negative electrode with a separator interposed between the positive electrode and the negative electrode. The stack-type electrode group is formed by stacking a sheet-shaped positive electrode and a sheet-shaped negative electrode with a separator interposed between the positive electrode and the negative electrode.

In the lithium secondary battery according to the embodiment of the present disclosure, a first spacer is provided between the negative electrode and the separator, and a second space is provided between the positive electrode and the separator. Hereinafter, the first spacer and the second spacer may also be collectively referred to simply as "spacer".

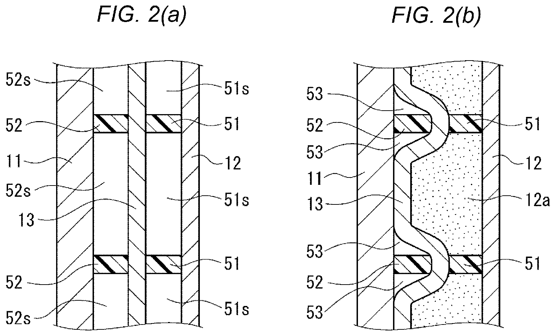

FIG. 2 is a cross-sectional view schematically showing a main part of an electrode group included in an example of a lithium secondary battery according to an embodiment of the present disclosure. FIG. 2(a) and FIG. 2(b) show the main part of the electrode group during discharge and during charge, respectively. FIG. 2 shows, in the case where the electrode group is a stack-type electrode group, a cross section taken in the stack direction, and in the case where the electrode group is a wound-type electrode group, a cross section taken in the winding axis direction.

As shown in FIG. 2(a), the electrode group includes a positive electrode 11, a negative electrode 12 and a separator 13. A first spacer 51 is provided between the negative electrode 12 and the separator 13, and a second spacer 52 is provided between the positive electrode 11 and the separator 13. A first space 51s is formed on a surface of the negative electrode 12 (the surface being the surface that faces the positive electrode 11) by the first spacer 51. A second space 52s is formed on a surface of the positive electrode 11 (the surface being the surface that faces the negative electrode 12) by the second spacer 52.

As shown in FIG. 2(b), during charge, lithium metal 12a deposits on the negative electrode 12. At this time, the lithium metal 12a first deposits in the first space 51s. As deposition of the lithium metal 12a proceeds, a portion of the separator 13 that is not in contact with the second spacer 52 is pushed toward the positive electrode 11. The portion of the separator 13 in which the second spacer 52 is not provided corresponds to the second space 52s, and thus the portion of the separator 13 in which the second spacer 52 is not provided is movable toward the positive electrode 11. Accordingly, expansion of the electrode group during repetition of charge and discharge is suppressed.

On the other hand, in a portion of the separator 13 that is in contact with the second spacer 52, movement of that portion of the separator 13 toward the positive electrode 11 during charge (during deposition of the lithium metal 12a) is suppressed, and thus a portion of the second space 52s near the second spacer 52 remains as a space 53. As the separator 13 is pushed by the deposited lithium metal 12a, the non-aqueous electrolyte is extruded out of the separator 13 into the space 53 and housed therein. As a result, a situation is suppressed in which the non-aqueous electrolyte is extruded out of the electrode group due to deposition of the lithium metal 12a (depletion of the non-aqueous electrolyte in the electrode group is suppressed).

From the foregoing, in the lithium secondary battery according to the present disclosure, by providing the first spacer and the second spacer, it is possible to suppress the depletion of the non-aqueous electrolyte in the electrode group while suppressing the expansion of the electrode group during repetition of charge and discharge. As a result, the cycle characteristics (discharge capacity retention rate) of the lithium secondary battery can be enhanced.

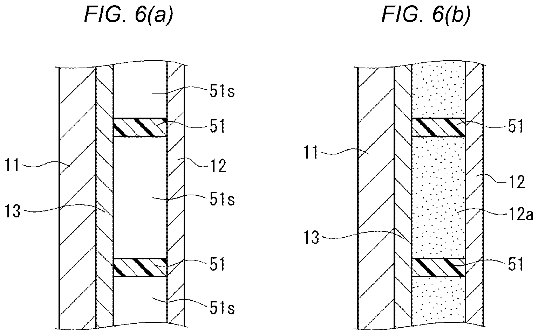

Hereinafter, an example will be described with reference to FIG. 6 in which a first spacer is provided without providing a second spacer. FIG. 6 is a cross-sectional view schematically showing a main part of an electrode group in which a first spacer is provided without providing a second spacer. FIG. 6(a) and FIG. 6(b) show the main part of the electrode group during discharge and during charge, respectively.

As shown in FIG. 6(a), in the case where a first spacer 51 is provided without providing a second spacer, a first space 51s is formed on the surface of the negative electrode 12, but a second space is not formed on the surface of the positive electrode 11. In this case, as shown in FIG. 6(b), lithium metal 12a deposits in the first space 51s during charge, and thus expansion of the electrode group is suppressed. However, a space for housing the non-aqueous electrolyte extruded out of the separator due to deposition of the lithium metal is unlikely to be formed. As a result, the non-aqueous electrolyte is extruded out of the electrode group, and thus depletion of the non-aqueous electrolyte in the electrode group is likely to occur.

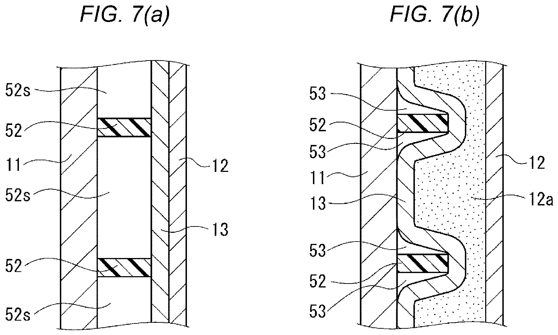

Also, an example will be described reference to FIG. 7 in which a second spacer is provided without providing a first spacer. FIG. 7 is a cross-sectional view schematically showing a main part of an electrode group in which a second spacer is provided without providing a first spacer. FIG. 7(a) and FIG. 7(b) show the main part of the electrode group during discharge and during charge, respectively.

As shown in FIG. 7(a), in the case where a second spacer 52 is provided without providing a first spacer, a second space 52s is formed on the surface of the positive electrode 11, but a first space is not formed on the surface of the negative electrode 12. In this case, as shown in FIG. 7(b), the second spacer 52 is pushed toward the positive electrode 11 together with the separator 13 by the deposited lithium metal 12a during charge. As a result, the distance between the negative electrode 12 and the positive electrode 11 increases, which may cause the electrode group to expand.

(Spacer)

From the viewpoint that expansion of the electrode group is likely to be suppressed, a ratio T1/T2 of a thickness T1 of the first spacer relative to a thickness T2 of the second spacer may be 1/3 or more, and is preferably 1 or more, and more preferably 2 or more. From the viewpoint that depletion of the non-aqueous electrolyte in the electrode group is likely to be suppressed, the ratio T1/T2 may be 7 or less, and is preferably 5 or less, and more preferably 3 or less. The thickness T1 of the first spacer is, for example, 10 μm or more and 35 μm or less. The term "the thickness of a spacer" is synonymous with the height of protrusions that constitute the spacer.

In the case where the first spacer and the second spacer are used together, the thickness of the first spacer can be reduced as compared with the case where only the first spacer is used. Accordingly, the separator can be provided near the negative electrode, and it is therefore possible to prevent lithium metal from sparsely depositing. That is, the deposition form of lithium metal can be controlled, and formation of dendrites (isolation of lithium metal, short circuiting, and the like caused by the formation of dendrites) can be suppressed.

From the viewpoint that the first space is sufficiently ensured, and a high initial charge capacity is likely to be obtained, a ratio S1/S0 of an area S1 in contact with the first spacer in a region on one surface of the negative electrode that faces the positive electrode relative to an area S0 of the region on the one surface of the negative electrode that faces the positive electrode may be 0.2 or less or 0.15 or less. Also, from the viewpoint that the first space is likely to be formed by the first spacer in a stable manner, the ratio S1/S0 may be 0.03 or more or 0.05 or more. In the case where the negative electrode includes a region that faces the positive electrode on each surface of the negative electrode, and a first spacer (a first space) is also formed on each surface of the negative electrode, it is desirable that, in each surface of the negative electrode, the ratio S1/S0 is within the above-described range.

From the viewpoint that the second space is sufficiently ensured, and a high initial charge capacity is likely to be obtained, a ratio S2/S0 of an area S2 in contact with the second spacer in a region on one surface of the positive electrode that faces the negative electrode relative to an area S0 of the region on the one surface of the positive electrode that faces the negative electrode may be 0.2 or less or 0.15 or less. Also, from the viewpoint that the second space is likely to be formed by the second spacer in a stable manner, the ratio S2/S0 may be 0.03 or more or 0.05 or more. In the case where the positive electrode includes a region that faces the negative electrode on each surface, and a second spacer (a second space) is also formed on each surface of the positive electrode, it is desirable that, in each surface of the positive electrode, the ratio S2/S0 is within the above-described range.

A ratio S1/S2 of the area S1 relative to the area S2 may be, for example, 0.3 or more and 3 or less.

Each spacer is composed of, for example, a plurality of protrusions. The protrusions may have a line shape, a dot shape, or the like. The line shape may be linear or curved. The spacer may be composed of a plurality of line-shaped protrusions, or may be composed of a plurality of dot-shaped protrusions provided in a distributed manner. Adjacent line-shaped protrusions may be connected to each other or spaced apart from each other. The line-shaped protrusions may have a width of 100 μm or more (or 200 μm or more) and 2000 μm or less (or 1000 μm or less).

From the viewpoint that the first space and the second space are likely to be formed in a stable manner, the first spacer and the second spacer (the protrusions that constitute the first spacer and the second spacer) are preferably provided to entirely or partially overlap each other via the separator. In the case where the first spacer and the second spacer are each composed of line-shaped protrusions, the first spacer and the second spacer may be provided such that portions where the line-shaped protrusions of the first spacer and the line-shaped protrusions of the second spacer intersect each other via the separator are formed as appropriate when the electrode group is formed.

In the case where the first spacer and the second spacer are each composed of line-shaped protrusions, a ratio W1/W2 of a width W1 of the line-shaped protrusions of the first spacer relative to a width W2 of the line-shaped protrusions of the second spacer may be, for example, 0.3 or more and 3 or less (or 1.5 or less).

It is desirable that the spacers have a predetermined pattern shape. The pattern shape may be a mesh shape, a stripe shape, a dot shape, or the like. At least one of the first spacer and the second spacer may have a mesh-shaped pattern. In the case of a spacer that has a mesh-shaped pattern, spaces are likely to be formed uniformly in a stable manner between the electrode and the separator by the spacer, and thus lithium metal is likely to be deposit uniformly, and a large stress applied locally to the electrode is likely to be suppressed.

The mesh-shaped pattern may be composed of a collection of polygons. As an example of the mesh-shaped pattern, a shape formed by combining polygons so as to share the sides of the polygons may be used. Examples of polygons include a triangle, a square, a hexagon, and the like. Different types of polygons may be combined. The mesh-shaped pattern may have a honeycomb shape.

In the case of a spacer that has a stripe-shaped pattern, for example, a plurality of line-shaped protrusions may be formed on a strip-shaped electrode (separator) to be spaced apart from each other in the width direction of the electrode (separator) and parallel in the length direction of the electrode (separator).

The first spacer and the second spacer may have different pattern shapes. By selecting different pattern shapes for the first spacer and the second spacer as appropriate, overlapping portions where the first spacer and the second spacer overlap each other via the separator can be formed in a stable manner when the electrode group is formed (particularly in the case where the electrode group is a wound-type electrode group). For example, intersecting portions where the line-shaped protrusions of the first spacer and the second spacer intersect each other via the separator can be formed in a stable manner. For example, the first spacer and the second spacer may be configured such that one of the first spacer and the second spacer has a mesh-shaped pattern, and the other one of the first spacer and the second spacer has a stripe-shaped pattern. In this case, overlapping portions (intersecting portions) of the first spacer and the second spacer via the separator can be formed in an appropriately distributed manner when the electrode group is formed. Accordingly, the first space and the second space can be formed in a stable manner when the electrode group is formed.

From the viewpoint of productivity, production cost, and the like, the first spacer and the second spacer may have the same pattern shape. For example, the first spacer and the second spacer may have a mesh-shaped pattern. In this case, the first spacer and the second spacer may be provided to entirely overlap each other via the separator, or may be displaced from each other to partially overlap via the separator. Overlapping portions (intersecting portions) of the first spacer and the second spacer via the separator can be formed in an appropriately distributed manner when the electrode group is formed (particularly in the case where the electrode group is a wound-type electrode group). Accordingly, the first space and the second space can be formed in a stable manner when the electrode group is formed.

The first spacer may be provided on a surface of the negative electrode (the surface being the surface that faces the positive electrode) or a surface of the separator (the surface being the negative electrode-side surface and where the positive electrode and the negative electrode face each other). The second spacer may be provided on a surface of the positive electrode (the surface being the surface that faces the negative electrode) or a surface of the separator (the surface being the positive electrode-side surface and where the positive electrode and the negative electrode face each other).

The first spacer and the second spacer may be provided such that the first spacer is provided on one surface (first main surface) of the separator and the second spacer is provided on the other surface (second main surface) of the separator. That is, a composite member that includes the separator, the first spacer, and the second spacer may be configured. The composite member is provided such that the first main surface is on the negative electrode side and the second main surface is on the positive electrode side when the electrode group is formed. In the composite member, the ratio T1/T2 is preferably within the above-described range (for example, 1 or more).

In the case where a spacer is provided only on one surface of the separator, the separator (substrate) may be warped on the side where the spacer is to be formed due to the stress applied when forming the spacer. The warpage of the separator may cause production problems (wrinkles and meandering during transportation, misalignment of end surfaces of the separator during winding (winding misalignment), and the like). In contrast, in the case where spacers are provided on both surfaces of the separator, the warpage of the separator is suppressed. In this case, when the spacers have a mesh-shaped pattern, the warpage of the separator is more likely to be suppressed.

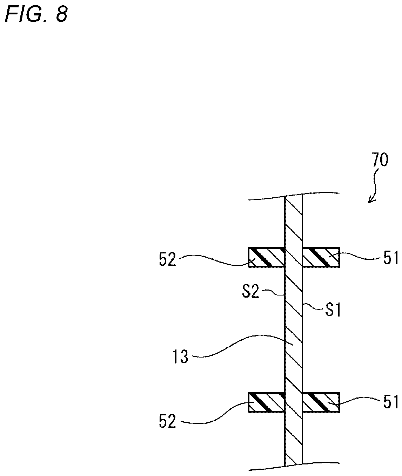

FIG. 8 is a schematic cross-sectional view of a main part of a composite member. FIG. 8 shows a cross section of the composite member in the thickness direction of the separator. FIG. 8 is provided to merely show an example of a composite member, and thus the configuration of the composite member is not limited thereto.

A composite member 70 includes a separator 13, a first spacer 51, and a second spacer 52. The separator 13 has a first main surface S1 and a second main surface S2 that is opposite to the first main surface S1. When the electrode group is formed, the first main surface S1 faces the negative electrode, and the second main surface S2 faces the positive electrode. The first spacer 51 is provided on the first main surface S1 of the separator 13. The second spacer 52 is provided on the second main surface S2 of the separator 13. The ratio T1/T2 of the thickness T1 of the first spacer 51 relative to the thickness T2 of the second spacer 52 is preferably 1 or more. In FIG. 8, the first spacer 51 and the second spacer 52 are provided at substantially the same position so as to overlap each other when the separator 13 is viewed from the normal direction of the first main surface S1 (the second main surface S2). However, the first spacer 51 and the second spacer 52 may be provided at different positions.

The material for constituting the spacer is not particularly limited. The spacer may be formed using a conductive material and/or an insulating material. The conductive material may be selected as appropriate from, for example, those listed as examples of the material for constituting a negative electrode current collector. The first spacer may be provided by, for example, pressing a negative electrode current collector to form protrusions. Also, a conductive coating material may be applied to the surface of the negative electrode, or conductive tape may be attached to the surface of the negative electrode.

As the insulating material, a resin material may be used. Examples of the resin material include a polyolefin resin, an acrylic resin, a polyamide resin, a polyimide resin, a silicone resin, a fluorine-based resin, a urethane resin, a melamine resin, a urea resin, and the like. A cured product of a curable resin such as an epoxy resin may also be used. A less lithium ion permeable resin material such as a polyimide, polyvinylidene fluoride, or an acrylonitrile-acrylic acid ester copolymer may also be used in the spacer.

Also, for the spacer, a mixture obtained by mixing an inorganic filler and the like with the resin material may also be used. As the inorganic filler, inorganic particles such as insulating metal oxide particles may be used. Examples of the insulating metal oxide include aluminum oxide (including alumina and boehmite), magnesium oxide, titanium oxide (titania), zirconium oxide, silicon oxide (silica), and the like.

The spacer may also be formed by, for example, attaching resin adhesive tape to the electrode or separator surface. The spacer may also be formed by applying a solution (or a dispersion liquid) that contains a resin material (or a resin material and an inorganic filler) onto the electrode or separator surface and drying the solution. The spacer may also be formed by applying a curable resin in a desired shape on the electrode or separator surface and curing the resin.

Hereinafter, an example of each constituent element of the lithium secondary battery will be described specifically. The constituent elements described below are merely examples, and thus the constituent elements of the lithium secondary battery of the present embodiment are not limited to those described below. As constituent elements other than the characteristic features of the present embodiment, known constituent elements may be used.

[Negative Electrode]

The negative electrode includes a negative electrode current collector. In the lithium secondary battery, lithium metal deposits on a surface of the negative electrode current collector during charge. More specifically, lithium ions contained in the non-aqueous electrolyte receive electrons on the negative electrode current collector during charge, transform into lithium metal, and deposits on the surface of the negative electrode current collector. The lithium metal deposited on the surface of the negative electrode current collector dissolves into lithium ions in the non-aqueous electrolyte during discharge. The lithium ions contained in the non-aqueous electrolyte may be derived from a lithium salt added to the non-aqueous electrolyte, may be supplied from a positive electrode active material during charge, or may be both.

As the negative electrode current collector, a conductive sheet can be used. In the case where the electrode group is a wound-type electrode group, a strip-shaped conductive sheet is used. Examples of the conductive sheet include a conductive film, a metal foil, and the like.

The conductive sheet may have a smooth surface. With this configuration, during charge, lithium metal derived from the positive electrode is likely to deposit uniformly on the conductive sheet. As used herein, the term "smooth" means that the conductive sheet has a maximum height roughness Rz of 20 $\mu$m or less. The maximum height roughness Rz of the conductive sheet may be 10 $\mu$m or less. The maximum height roughness Rz is measured in accordance with JIS B 0601:2013.

As the material for constituting the negative electrode current collector (conductive sheet), a conductive material other than lithium metal and lithium alloys may be used. As the conductive material, a metal material such as a metal or an alloy may be used. The conductive material is preferably a material that that is unreactive with lithium. More specifically, it is preferable to use a material that does not form an alloy or intermetallic compound with lithium. As the conductive material described above, it is possible to use, for example, copper (Cu), nickel (Ni), iron (Fe), an alloy that contains any of these metal elements, or graphite whose basal planes are preferentially exposed. As the alloy, a copper alloy, stainless steel (SUS), or the like may be used. It is preferable to use copper and/or a copper alloy because they have high conductivity. The thickness of the negative electrode current collector may be, but is not particularly limited thereto, in a range of 5 to 300 $\mu$m.

A negative electrode material mixture layer may be formed on the surface of the negative electrode current collector. The negative electrode material mixture layer is formed by, for example, applying a paste that contains a negative electrode active material such as graphite onto at least a portion of the surface of the negative electrode current collector. However, from the viewpoint of achieving a lithium secondary battery that has a capacity higher than that of lithium ion batteries, the negative electrode material mixture layer is configured to be sufficiently thin in thickness so that lithium metal can deposit on the negative electrode.

The negative electrode may include the negative electrode current collector and a sheet-shaped lithium metal or a lithium alloy provided on the negative electrode current collector. That is, a lithium metal-containing underlying layer (a layer made of lithium metal or a lithium alloy) may be formed in advance on the negative electrode current collector. The lithium alloy may contain, in addition to lithium, an element such as aluminum, magnesium, indium, or zinc. By forming a lithium metal-containing underlying layer on the negative electrode current collector in advance to cause lithium metal to deposit thereon during charge, deposition of dendrites can be more effectively suppressed. The thickness of the underlying layer may be, but is not particularly limited to, for example, in a range of 5 $\mu$m to 25 $\mu$m.

[Positive Electrode]

The positive electrode includes, for example, a positive electrode current collector and a positive electrode material mixture layer supported on the positive electrode current collector. The positive electrode material mixture layer contains, for example, a positive electrode active material, a conductive material, and a binder. The positive electrode material mixture layer may be formed only on one surface or both surfaces of the positive electrode current collector. The positive electrode can be obtained by, for example, applying a positive electrode material mixture slurry that contains a positive electrode active material, a conductive material, and a binder onto both surfaces of the positive electrode current collector, and drying the coating films, and then rolling the coating films.

The positive electrode active material is a material that absorbs and desorbs lithium ions. Examples of the positive electrode active material include a lithium-containing transition metal oxide, a transition metal fluoride, a polyanion, a fluorinated polyanion, a transition metal sulfide, and the like. Out of these, it is preferable to use a lithium-containing transition metal oxide because the production cost is low and the average discharge voltage is high.

Examples of the transition metal element contained in the lithium-containing transition metal oxide include Sc, Ti, V, Cr, Mn, Fe, Co, Ni, Cu, Y, Zr, W, and the like. The lithium-containing transition metal oxide may contain one or two or more transition metal elements. The transition metal element may be Co, Ni and/or Mn. The lithium-containing transition metal oxide may contain one or more representative elements where necessary. Examples of the representative element include Mg, Al, Ca, Zn, Ga, Ge, Sn, Sb, Pb, Bi, and the like. The representative element may be Al or the like.

As the lithium-containing transition metal oxide, it is preferable to use, from the viewpoint of obtaining a high capacity, a composite oxide that contains Co, Ni and/or Mn as transition metal elements, and may contain Al as an optional component, and has a layered rock salt crystal structure. In this case, in the lithium secondary battery, a molar ratio mLi/mM of a total amount mLi of lithium contained in the positive electrode and the negative electrode relative to an amount mM of metal M other than lithium contained in the positive electrode is set to, for example, 1.1 or less.

As the conductive material, for example, a carbon material may be used. Examples of the carbon material include carbon black, acetylene black, ketchen black, carbon nanotubes, graphite, and the like.

Examples of the binder include a fluorine resin, polyacrylonitrile, a polyimide resin, an acrylic resin, a polyolefin resin, a rubber-like polymer, and the like. Examples of the fluorine resin include polytetrafluoroethylene, polyvinylidene fluoride, and the like.

As the positive electrode current collector, a conductive sheet can be used. As the conductive sheet, a foil, a film, or the like is used. A carbon material may be applied to the surface of the positive electrode current collector.

As the material for constituting the positive electrode current collector (conductive sheet), for example, a metal material that contains Al, Ti, Fe, or the like may be used. Examples of the metal material include Al, an Al alloy, Ti, a Ti alloy, an Fe alloy, and the like. The Fe alloy may be stainless steel (SUS). The thickness of the positive electrode current collector may be, but is not particularly limited thereto, in a range of 5 to 300 $\mu$m.

[Separator]

As the substrate of the separator, an ion permeable insulating porous sheet is used. Examples of the porous sheet include a porous membrane, a woven fabric, a non-woven fabric, and the like. The material for constituting the separator may be, but is not particularly limited to, a polymer material. Examples of the polymer material include a polyolefin resin, a polyamide resin, cellulose, and the like. Examples of the polyolefin resin include polyethylene, polypropylene, a copolymer of ethylene and propylene, and the like. The substrate may contain an additive where necessary. As the additive, an inorganic filler or the like can be used. As the substrate, a sheet that is usually used as a separator for a lithium secondary battery may also be used.

[Non-Aqueous Electrolyte]

The non-aqueous electrolyte that has lithium ion conductivity contains, for example, a non-aqueous solvent and lithium ions and anions dissolved in the non-aqueous solvent. The non-aqueous electrolyte may be in the form of a liquid or gel.

The non-aqueous electrolyte in the form of a liquid is prepared by dissolving a lithium salt in a non-aqueous solvent. As a result of the lithium salt being dissolved in the non-aqueous solvent, lithium ions and anions are generated.

The non-aqueous electrolyte in the form of a gel contains a lithium salt and a matrix polymer, or a lithium salt, a non-aqueous solvent, and a matrix polymer. As the matrix polymer, for example, a polymer material that can form a gel by absorbing the non-aqueous solvent is used. As the polymer material, a fluorine resin, an acrylic resin, a polyether resin, or the like can be used.

As the lithium ions and anions, known lithium salts and anions usually used in non-aqueous electrolytes for lithium secondary batteries can be used. Specific examples include $BF_4^-$, $ClO_4^-$, $PF_6^-$, $CF_3SO_3^-$, $CF_3CO_2^-$, an imide anion, an oxalate complex anion, and the like. Examples of the imide anion include $N(SO_2CF_3)_2^-$, $N(C_mF_{2m+1}SO_2)_x(C_nF_{2n+1}SO_2)_y^-$, and the like, where m and n each independently represent an integer of 0, 1 or more, x and y each independently represent 0, 1, or 2, and x and y satisfy x + y = 2. The oxalate complex anion may contain boron and/or phosphorus. Examples of the oxalate complex anion include a bis(oxalate)borate anion, $BF_2(C_2O_4)^-$, $PF_4(C_2O_4)^-$, $PF_2(C_2O_4)_2^-$, and the like. The non-aqueous electrolyte may contain one or two or more types of these anions.

From the viewpoint of suppressing the deposition of lithium metal to form dendrites, the non-aqueous electrolyte preferably contains an oxalate complex anion. Due to interaction of the oxalate complex anion with lithium, lithium metal is likely to deposit uniformly in the form of fine particles. For this reason, local deposition of lithium metal can be easily suppressed. The oxalate complex anion may be combined with a different type of anion. The different type of anion may be $PF_6^-$ and/or an imide anion.

The non-aqueous electrolyte may contain, as a solute (a lithium salt), $LiBF_2(C_2O_4)$ (lithium difluorooxalatoborate).

Examples of the non-aqueous solvent include an ester, an ether, a nitrile, an amide, and a halogen substitution thereof. The non-aqueous electrolyte may contain one or two or more of these non-aqueous solvents. As the halogen substitution, a fluoride or the like can be used.

Examples of the ester include a carbonic ester, a carboxylic ester, and the like. Example of a cyclic carbonic ester include ethylene carbonate, propylene carbonate, fluoroethylene carbonate (FEC), and the like. Examples of a linear carbonic ester include dimethyl carbonate (DMC), ethyl methyl carbonate (EMC), diethyl carbonate, and the like. Examples of a cyclic carboxylic ester include γ-butyrolactone, γ-valerolactone, and the like. Examples of a linear carboxylic ester include ethyl acetate, methyl propionate, methyl fluoropropionate, and the like.

Examples of the ether include a cyclic ether and a linear ether. Examples of the cyclic ether include 1,3-dioxolane, 4-methyl-1,3-dioxolane, tetrahydrofuran, 2-methyltetrahydrofuran, and the like. Examples of the linear ether include 1,2-dimethoxy ethane, diethyl ether, ethyl vinyl ether, methyl phenyl ether, benzyl ethyl ether, diphenyl ether, dibenzyl ether, 1,2-diethoxy ethane, diethylene glycol dimethyl ether, and the like.

The concentration of the lithium salt in the non-aqueous electrolyte is, for example, 0.5 mol/L or more and 3.5 mol/L or less. The concentration of the anion in the non-aqueous electrolyte may be set to 0.5 mol/L or more and 3.5 mol/L or less. Also, the concentration of the oxalate complex anion in the non-aqueous electrolyte may be 0.05 mol/L or more and 1 mol/L or less.

The non-aqueous electrolyte may contain an additive. As the additive, an additive that forms a coating film on the negative electrode may be used. As a result of a coating film derived from the additive being formed on the negative electrode, the formation of dendrites is likely to be suppressed. Examples of the additive include vinylene carbonate, FEC, vinyl ethyl carbonate (VEC), and the like.

Hereinafter, an example of a lithium secondary battery according to the present embodiment will be described specifically with reference to the drawings. The constituent elements described above can be applied as the constituent elements of the example of the lithium secondary battery described below. Also, the examples of constituent elements described below can be changed based on the foregoing description. The features described below may also be applied to the embodiment described above. In the lithium secondary battery described below, the constituent elements that are not essential to the lithium secondary battery according to the present disclosure may be omitted. In the diagrams which will be referred to in the following description, for the sake of facilitating the understanding, the scale of constituent elements is changed.

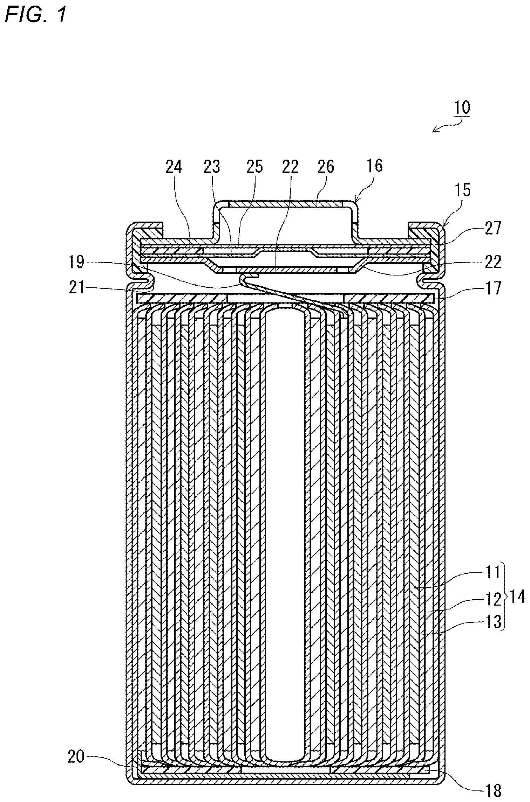

FIG. 1 is a vertical cross-sectional view schematically showing an example of a lithium secondary battery according to the present embodiment. For the sake of convenience, illustration of the first spacer and the second spacer is omitted and thus not shown in FIG. 1. A cylindrical lithium secondary battery 10 shown in FIG. 1 includes a cylindrical battery case and a wound-type electrode group 14 and a non-aqueous electrolyte (not shown) that are housed in the battery case. The battery case includes a case main body 15, which is a bottomed cylindrical metal container, and a sealing member 16 that seals an opening of the case main body 15. A gasket 27 is provided between the case main body 15 and the sealing member 16. The airtightness of the battery case is ensured by the gasket 27. In the case main body 15, an upper insulating plate 17 and a lower insulating plate 18 are provided on opposite ends of the electrode group 14 in the winding axis direction.

The case main body 15 includes a step portion 21 formed by, for example, partially pressing the side wall of the case main body 15 from outside. The step portion 21 may be formed in an annular shape along the circumferential direction of the case main body 15 around on the side wall of the case main body 15. In this case, the sealing member 16 is supported on a surface of the step portion 21 on the opening side.

The sealing member 16 includes a filter 22, a lower valve 23, an insulating member 24, an upper valve 25, and a cap 26. These members are stacked in this order in the sealing member 16. The sealing member 16 is attached to the opening of the case main body 15 such that the cap 26 is positioned outside of the case main body 15 and the filter 22 is positioned inside of the case main body 15. The above-described members that constitute the sealing member 16 have, for example, a disc or ring shape. The lower valve 23 and the upper valve 25 are connected to each other at their center portions, with the insulating member 24 being interposed between their peripheral edges. The filter 22 and the lower valve 23 are connected to each other at their center portions. The upper valve 25 and the cap 26 are connected to each other at their center portions. That is, the members excluding the insulating member 24 are electrically connected to each other.

Although not shown, the lower valve 23 includes a ventilation hole. Accordingly, if the internal pressure of the battery case increases due to overheating or the like, the upper valve 25 bulges toward the cap 26 and moves apart from the lower valve 23. The electric connection between the lower valve 23 and the upper valve 25 is thereby interrupted. If the internal pressure further increases, the upper valve 25 ruptures, and gas is released from an opening (not shown) of the cap 26.

The electrode group 14 includes a positive electrode 11, a negative electrode 12, and a separator 13. The positive electrode 11, the negative electrode 12, and the separator 13 all have a strip shape. The positive electrode 11 and the negative electrode 12 are spirally wound with the separator 13 interposed therebetween such that the width direction of the strip-shaped positive electrode 11 and the strip-shaped negative electrode 12 is parallel to the winding axis. In a cross section perpendicular to the winding axis of the electrode group 14, the positive electrode 11 and the negative electrode 12 are alternately layered in the radial direction of the electrode group 14 with the separator 13 being interposed therebetween. That is, the lengthwise direction of the electrodes corresponds to the winding direction, and the width direction of the electrodes corresponds to the axis direction.

The positive electrode 11 includes a positive electrode current collector and a positive electrode material mixture layers supported on both surfaces of the positive electrode current collector. The positive electrode current collector of the positive electrode 11 is electrically connected to the cap 26 that functions as a positive electrode terminal via a positive electrode lead 19. As the negative electrode 12, a negative electrode (a negative electrode current collector) on which lithium metal deposition has not occurred is shown. The negative electrode 12 is electrically connected to the case main body 15 that functions as a negative electrode terminal via a negative electrode lead 20.

FIG. 2 is an enlarged view of a main part of the electrode group shown in FIG. 1. FIG. 2(a) and FIG. 2(b) schematically show the main part of the electrode group during discharge and during charge, respectively.

As shown in FIG. 2(a), a first spacer 51 is provided between the negative electrode 12 and the separator 13, and a second spacer 52 is provided between the positive electrode 11 and the separator 13. A first space 51s is formed on a surface of the negative electrode 12 (the surface being the surface that faces the positive electrode 11) by the first spacer 51. A second space 52s is formed on a surface of the positive electrode 11 (the surface being the surface facing negative electrode 12) by the second spacer 52.

As shown in FIG. 2(b), lithium metal 12a deposits on the surface of the negative electrode 12 during charge. Due to the first spacer 51 (the first space 51s) and the second spacer 52 (the second space 52s), during charge, an increase in the distance between the positive electrode 11 and the negative electrode 12 is suppressed, and a portion of the second space 52s remains as a space 53 in which the non-aqueous electrolyte can be housed. Accordingly, the expansion of the electrode group 14 during repetition of charge and discharge is suppressed, and depletion of the non-aqueous electrolyte in the electrode group 14 is also suppressed.

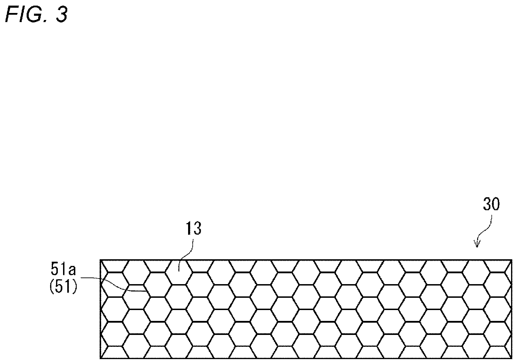

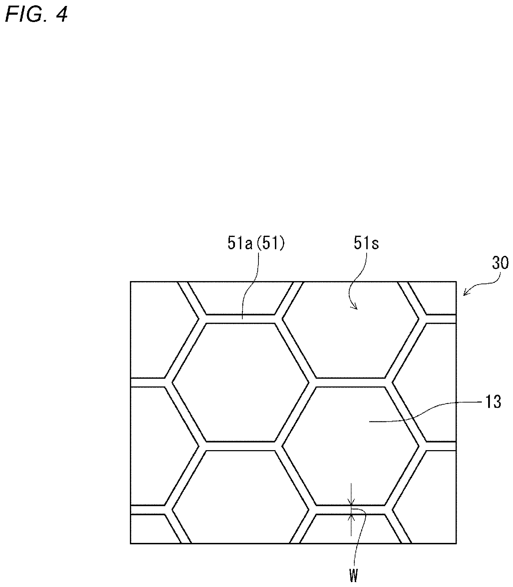

An example of a pattern shape of the first spacer 51 is shown in FIG. 3, and a partially enlarged view of FIG. 3 is shown in FIG. 4. In the example shown in FIG. 3, the first spacer 51 is composed of line-shaped protrusions 51a. The line-shaped protrusions 51a are arranged in a mesh shape. More specifically, the line-shaped protrusions 51a are formed uniformly in a honeycomb-shaped pattern. The honeycomb-shaped pattern is a pattern in which a plurality of hexagons are arranged to share the sides of the hexagons. First spaces 51s are formed in regions where the line-shaped protrusions 51a are not provided. In FIG. 4, width W of the line-shaped protrusions 51a is shown.

As shown in FIG. 3, the first spacer 51 is formed on the separator 13 (the negative electrode 12 side-surface and where the positive electrode 11 and the negative electrode 12 face each other). The separator 13 and the first spacer 51 may together form a composite separator 30. Alternatively, the first spacer 51 may be formed on the negative electrode 12 (the surface that faces the positive electrode 11).

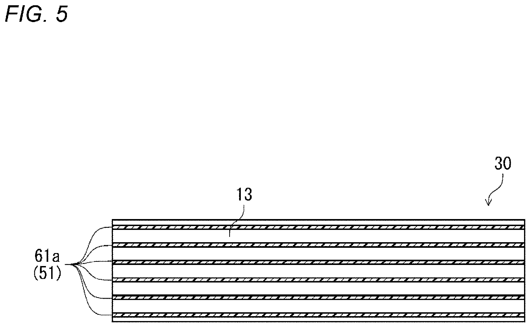

The first spacer 51 has a pattern shape as shown in FIG. 3, but the pattern shape of the first spacer is not limited thereto. For example, the first spacer 51 may have a pattern shape as shown in FIG. 5. FIG. 5 shows another example of a pattern shape of the first spacer 51. A plurality of line-shaped protrusions 61a that constitute the first spacer 51 are provided to be spaced apart from each other in the width direction of the strip-shaped separator 13 and parallel in the lengthwise direction of the separator 13. That is, the plurality of line-shaped protrusions 61a are arranged in a stripe-shaped pattern. In the example shown in FIG. 5, six line-shaped protrusions 61a are provided, but the number of line-shaped protrusions is not limited thereto.

As with the first spacer 51, the second spacer 52 is also composed of a plurality of line-shaped protrusions, and has the same pattern shape as that of the first spacer 51. The second spacer 52 may be formed on the separator 13 (the positive electrode 11 side-surface and where the positive electrode 11 and the negative electrode 12 face each other) or on the positive electrode 11 (the surface that faces the negative electrode 12).

The second spacer 52 has the same pattern shape as that shown in FIG. 3, but the pattern shape of the second spacer 52 is not limited thereto. The second spacer may have, for example, the same pattern shape as that shown in FIG. 5.

The first spacer 51 and the second spacer 52 are provided to overlap each other. That is, the first spacer 51 and the second spacer 52 are provided at substantially the same position via the separator 13 between the positive electrode 11 and the negative electrode 12.

In FIG. 2, the first spacer 51 and the second spacer 52 have the same pattern shape and are provided to overlap each other. However, the arrangement of the first spacer and the second spacer is not limited thereto. The first spacer and the second spacer may have the same pattern shape and be provided to be displaced from each other. The first spacer and the second spacer may have different pattern shapes (for example, one of the first spacer and the second spacer may have a honeycomb-shaped pattern, and the other one may have a stripe-shaped pattern). The separator 13, the first spacer 51, and the second spacer 52 shown in FIG. 2 may together form a composite member 70 as shown in FIG. 8.

The examples given above were described by taking a cylindrical lithium secondary battery that includes a wound-type electrode group as an example. However, the present embodiment is not limited thereto and can be applied to any type. The shape of the lithium secondary battery is not limited to a cylindrical shape, and can be selected as appropriate from among various types of shapes such as a coin shape, a prismatic shape, a sheet shape, and a flat shape according to the application of the battery or the like. There is also no particular limitation on the type of electrode group, and the electrode group may be a stack-type electrode group. Also, as the constituent elements of the lithium secondary battery other than the electrode group and the non-aqueous electrolyte, known constituent elements can be used without a particular limitation.

<<Additional Statement>>

The following techniques are disclosed based on the description of the embodiment given above.

(Technique 1)

A lithium secondary battery including: a positive electrode; a negative electrode; a separator provided between the positive electrode and the negative electrode; and a lithium ion-conductive non-aqueous electrolyte, wherein the negative electrode is an electrode on which lithium metal deposits during charge and the lithium metal dissolves during discharge, a first spacer is provided between the negative electrode and the separator, and a second spacer is provided between the positive electrode and the separator.

(Technique 2)

The lithium secondary battery in accordance with technique 1, wherein T1/T2 that is a ratio of a thickness T1 of the first spacer relative to a thickness T2 of the second spacer is 1 or more.

(Technique 3)

The lithium secondary battery in accordance with technique 2, wherein the ratio T1/T2 is 2 or more.

(Technique 4)

The lithium secondary battery in accordance with any one of techniques 1 to 3, wherein the first spacer and the second spacer have different pattern shapes.

(Technique 5)

The lithium secondary battery in accordance with any one of techniques 1 to 3, wherein at least one of the first spacer and the second spacer has a mesh-shaped pattern.

(Technique 6)

The lithium secondary battery in accordance with technique 5, wherein the mesh-shaped pattern is composed of a collection of polygons.

(Technique 7)

The lithium secondary battery in accordance with technique 6, wherein the mesh-shaped pattern has a honeycomb shape.

(Technique 8)

The lithium secondary battery in accordance with any one of techniques 1 to 7, wherein the non-aqueous electrolyte contains lithium ions and anions, and the anions include an oxalate complex anion.

(Technique 9)

A composite member including: a separator that has a first main surface and a second main surface that is opposite to the first main surface; a first spacer provided on the first main surface; and a second spacer provided on the second main surface, wherein T1/T2 that is a ratio of a thickness T1 of the first spacer relative to a thickness T2 of the second spacer is 1 or more.

(Technique 10)

The composite member in accordance with technique 9, wherein the ratio T1/T2 is 2 or more.

(Technique 11)

The composite member in accordance with technique 9 or 10, wherein the first spacer and the second spacer have different pattern shapes.

(Technique 12)

The composite member in accordance with technique 9 or 10, wherein at least one of the first spacer and the second spacer has a mesh-shaped pattern.

(Technique 13)

The composite member in accordance with technique 12, wherein the mesh-shaped pattern is composed of a collection of polygons.

(Technique 14)

The composite member in accordance with technique 13, wherein the mesh-shaped pattern has a honeycomb shape.

[Examples]

Hereinafter, the lithium secondary battery according to the present disclosure will be described specifically based on examples and comparative examples. However, it is to be noted that the present disclosure is not limited to the examples given below.

<<Example 1>>

(Production of Positive Electrode)

A layered rock salt-type lithium-containing transition metal oxide (NCA as a positive electrode active material) containing Li, Ni, Co, and Al (at a molar ratio of Li relative to the total of Ni, Co, and Al of 1.0) was prepared. The lithium-containing transition metal oxide (NCA) was mixed with acetylene black (AB as a conductive material) and polyvinylidene fluoride (PVdF as a binder) at a mass ratio of NCA:AB:PVDF = 95:2.5:2.5. Then, an appropriate amount of N-methyl-2-pyrrolidone (NMP) was added to the mixture, and the mixture was stirred to prepare a positive electrode material mixture slurry. Next, the obtained positive electrode material mixture slurry was applied to both surfaces of a strip-shaped Al foil (as a positive electrode current collector), and dried to form positive electrode material mixture coating films on the both surfaces of the strip-shaped Al foil. Next, the coating films were rolled using a roller. Finally, the obtained stacked body of the positive electrode current collector and the positive electrode material mixture was cut into a predetermined electrode size. In this way, a positive electrode including positive electrode material mixture layers on both surfaces of the positive electrode current collector was produced.

(Preparation of Negative Electrode)

As a negative electrode, a strip-shaped copper foil (with a thickness of 12 $\mu$m) having rolled lithium metal layers (each with a thickness of 25 $\mu$m) formed on both surfaces of the copper foil was used.

(Preparation of Separator)

As a separator, a strip-shaped polyethylene porous membrane (with an average thickness of 10 μm) was prepared.

(Formation of First Spacer)

A coating solution containing polyvinylidene fluoride and alumina particles (as an inorganic filler) was dispensed in a pattern as shown in FIG. 3 on one surface (negative electrode-side surface) of the separator using a dispenser. After that, the coating solution was vacuum-dried. In this way, a first spacer with a honeycomb shape as shown in FIG. 3 was formed on the surface of the separator.

The mesh shape of the first spacer was regular hexagonal. The height of line-shaped protrusions constituting the first spacer was set to 30 μm (the first spacer having a thickness T1 of 30 μm). The spacing between every two opposite sides of a regular hexagonal mesh shape was set to about 4.5 mm. The width of the line-shaped protrusions was set to 0.25 mm. In a region (facing region) of the separator where the positive electrode and the negative electrode faced each other, an area S1 of the first spacer was set to 10% of an area S0 of the facing region.

(Formation of Second Spacer)

A coating solution containing polyvinylidene fluoride and alumina particles (as an inorganic filler) was dispensed in a pattern as shown in FIG. 3 on both surfaces of the positive electrode using a dispenser. After that, the coating solution was vacuum-dried. In this way, second spacers with a honeycomb shape as shown in FIG. 3 were formed on the surfaces of the positive electrode.

The mesh shape of the second spacers was regular hexagonal. The height of line-shaped protrusions constituting each of the second spacers was set to 10 μm (each of the second spacers having a thickness T2 of 10 μm). The spacing between every two opposite sides of a regular hexagonal mesh shape was set to about 4.5 mm. The width of the line-shaped protrusions was set to 0.25 mm. An area S2 of the second spacers was set to 10% of the area S0 of the facing region where the positive electrode and the negative electrode faced each other.

(Preparation of Non-Aqueous Electrolyte)

Ethylene carbonate (EC) and dimethyl carbonate (DMC) were mixed at a volume ratio of EC:DMC = 30:70. $LiPF_6$ and $LiBF_2 (C_2O_4)$ were dissolved in the obtained mixed solvent at a $LiPF_6$ concentration of 1 mol/L and a $LiBF_2 (C_2O_4)$ concentration of 0.1 mol/L. In this way, a non-aqueous electrolyte in the form of a liquid was prepared.

(Production of Battery)

An Al tab was attached to the positive electrode prepared above. A Ni tab was attached to the negative electrode prepared above. The positive electrode and the negative electrode were spirally wound with the separator interposed therebetween in an inert gas atmosphere to produce a wound-type electrode group.

Specifically, a first separator, the negative electrode prepared above, a second separator, and the positive electrode were stacked in this order to form a stacked body. The stacked body was wound by winding around a winding core such that the first separator was on the inside (the positive electrode was on the outside). After winding the stacked body, the winding core was removed. As the positive electrode, the above-prepared positive electrode with the second spacers provided on both surfaces thereof was used. As the first separator and the second separator, the above-prepared separator with the first spacer provided on one surface of the separator was used. The separators were provided such that the surface on which the first spacer was provided was on the negative electrode side. A dimension of the negative electrode in the lengthwise direction was adjusted as appropriate so that all of the positive electrode material mixture layers on both surfaces of the positive electrode faced the negative electrode when the stacked body was wound. A dimension of each of the first separator and the second separator in the lengthwise direction was adjusted as appropriate so that the first separator and the second separator were positioned on the outermost side when the stacked body was wound.

The obtained electrode group was housed in a bag-shaped outer casing made of a laminate sheet having an Al layer formed thereon, and the above-described non-aqueous electrolyte was injected into the outer casing in which the electrode group was housed. After that, the outer casing was sealed. In this way, a lithium secondary battery A1 was produced.

<<Examples 2 to 4>>

Batteries A2 to A4 were produced in the same manner as the battery A1 of Example 1 was produced, except that the thickness T1 of the first spacer and the thickness T2 of the second spacers were changed to values shown in Table 1.

<<Example 5>>

A battery A5 was produced in the same manner as the battery A1 of Example 1 was produced, except that the pattern of the second spacers formed on both surfaces of the positive electrode was changed to a pattern (stripe-shaped pattern) as shown in FIG. 5.

The line-shaped protrusions constituting each of the second spacers were provided to be spaced apart from each other in the width direction of the positive electrode and parallel in the lengthwise direction of the positive electrode. The number of line-shaped protrusions was six. The height and width of the line-shaped protrusions were set to 10 $\mu$m and 0.25 mm, respectively. The spacing between line-shaped protrusions was adjusted as appropriate so that the area S2 of the second spacers was 10% of the area S0 of the facing region where the positive electrode and the negative electrode faced each other.

<<Comparative Example 1>>

A battery B1 was produced in the same manner as the battery A1 of Example 1 was produced, except that the thickness of the first spacer was changed to 40 $\mu$m, and the second spacers were not formed.

<<Comparative Example 2>>

A battery B2 was produced in the same manner as the battery A1 of Example 1 was produced, except that the thickness of the second spacers was changed to 40 $\mu$m, and the first spacer was not formed.

[Evaluation]

The batteries produced above were subjected to the following evaluation tests.

(Charge/Discharge Test)

Each of the obtained batteries was subjected to a charge/discharge test. In the charge/discharge test, the battery was charged in a thermostatic chamber at 25°C under the following charge condition, rested for 20 minutes, and then discharged under the following discharge condition.

(Charge)

The battery was subjected to constant current charge at a current of 2.15 mA per electrode unit area ($cm^2$) to a battery voltage of 4.1 V, and then subjected to constant voltage charge at a voltage of 4.1 V to an electric current value per electrode unit area of 0.54 mA.

(Discharge)

The battery was subjected to constant current discharge at a current of 2.15 mA per electrode unit area to a battery voltage of 3.75 V

(Electrode Group Expansion Rate)

The above-described charge/discharge process was defined as one cycle, and each produced battery was charged for two cycles. Then, a battery before being subjected to the charge/discharge process and the battery charged for two cycles were each disassembled to take out the stacked body including: the positive electrode with the second spacers provided on both surfaces thereof; the negative electrode; and the two separators provided on both surfaces of the negative electrode (the two separators being the first separator and the second separator each with the spacer provided on their negative electrode-side surface). The disassembling of the batteries was performed in an inert gas atmosphere. The stacked bodies taken out of the batteries were cleaned with dimethyl carbonate and then dried.

A thickness Xd of the stacked body of the battery before being subjected to the charge/discharge process was determined. The thickness Xd of the stacked body of the battery before being subjected to the charge/discharge process is a total thickness of the constituent members of the stacked body of the battery before being subjected to the charge/-discharge process. That is, the thickness Xd is a total thickness of the positive electrode, the negative electrode, the two separators, the first spacers provided on the negative electrode-side surface of each of the two separators, and the second spacers provided on one surface and the other surface of the positive electrode.

A thickness Xc of the stacked body of the battery charged for two cycles was determined. The thickness Xc of the stacked body of the battery charged for two cycles is a total thickness of the positive electrode, the negative electrode, the two separators, and the lithium metal deposited on one surface and the other surface of the negative electrode.

For the thickness measurement, a peacock digital thickness gauge G2-205M was used. An arithmetic average of measured thickness values obtained at arbitrarily selected five points was determined and defined as thickness.

Using the obtained thicknesses Xd and Xc, electrode group expansion rate (%) was determined from the following equation.

$$\text{Electrode group expansion rate} = (Xc/Xd) \times 100$$

(Discharge Capacity Retention Rate)

The above-described charge/discharge process was defined as one cycle, and each produced battery was charged and discharged for 200 cycles. A ratio (%) of discharge capacity at the 200th cycle relative to discharge capacity at the first cycle was determined as defined as discharge capacity retention rate.

(Initial Charge Capacity)

Also, the charge capacity at the first cycle was determined and defined as initial charge capacity.

The evaluation results are shown in Table 1.

[Table 1]

| Battery | First spacer | | Second spacer | | Thickness ratio T1/T2 | Initial charge capacity (mAh) | Electrode group expansion rate (%) | Discharge capacity retention rate at 200th cycle (%) |
|---|---|---|---|---|---|---|---|---|
| | Thickness T1 ($\mu$m) | Pattern | Thickness T2 ($\mu$m) | Pattern | | | | |
| A2 | 35 | Honeycomb | 5 | Honeycomb | 7 | 488 | 103.4 | 85 |
| A1 | 30 | Honeycomb | 10 | Honeycomb | 3 | 488 | 103.4 | 91 |
| A3 | 20 | Honeycomb | 20 | Honeycomb | 1 | 488 | 104.4 | 90 |
| A4 | 10 | Honeycomb | 30 | Honeycomb | 1/3 | 488 | 105.8 | 85 |
| A5 | 30 | Honeycomb | 10 | Stripe | 3 | 488 | 103.7 | 92 |
| B1 | 40 | Honeycomb | 0 | - | - | 491 | 103.4 | 82 |
| B2 | 0 | - | 40 | Honeycomb | - | 496 | 110.2 | 83 |

The batteries A1 to A5 exhibited a high initial charge capacity, a high discharge capacity retention rate, and a low electrode group expansion rate.

In the battery B1 in which the first spacer was provided, the electrode group expansion rate was reduced, but because the second spacers were not provided, the non-aqueous electrolyte contained in the electrode group depleted, resulting in a low discharge capacity retention rate. In the battery B2 in which the second spacers were provided, because the first spacer was not provided, the electrode group expansion rate was high, and the discharge capacity retention rate was low. The batteries B1 and B2 included the electrode groups as shown in FIGS. 6 and 7, respectively.

[Industrial Applicability]

The lithium secondary battery according to the present disclosure is applicable to: electronic devices including mobile phones, smartphones, and tablet terminals; electric vehicles including hybrid vehicles and plug-in hybrid vehicles;

home storage batteries combined with solar cells; and the like.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

[Reference Signs List]

10: lithium secondary battery
11: positive electrode
12: negative electrode
12a: lithium metal
13: separator
14: electrode group
15: case main body
16: sealing member
17: upper insulating plate
18: lower insulating plate
19: positive electrode lead
20: negative electrode lead
21: main portion
22: filter
23: lower valve
24: insulating member
25: upper valve
26: cap
27: gasket
30: composite separator
40: negative electrode
51: first spacer
51s: first space
51a: line-shaped protrusion
52: second spacer
52s: second space
53: space
61a: line-shaped protrusion
70: composite member

**Claims**

1. A lithium secondary battery comprising:

   a positive electrode;
   a negative electrode;
   a separator provided between the positive electrode and the negative electrode; and
   a lithium ion-conductive non-aqueous electrolyte,
   wherein the negative electrode is an electrode on which lithium metal deposits during charge and the lithium metal dissolves during discharge,
   a first spacer is provided between the negative electrode and the separator, and
   a second spacer is provided between the positive electrode and the separator.

2. The lithium secondary battery in accordance with claim 1,
   wherein T1/T2 that is a ratio of a thickness T1 of the first spacer relative to a thickness T2 of the second spacer is 1 or more.

3. The lithium secondary battery in accordance with claim 2,
   wherein the ratio T1/T2 is 2 or more.

4. The lithium secondary battery in accordance with claim 1,
   wherein the first spacer and the second spacer have different pattern shapes.

5. The lithium secondary battery in accordance with claim 1,
   wherein at least one of the first spacer and the second spacer has a mesh-shaped pattern.

6. The lithium secondary battery in accordance with claim 5,
   wherein the mesh-shaped pattern is composed of a collection of polygons.

7. The lithium secondary battery in accordance with claim 6, wherein the mesh-shaped pattern has a honeycomb shape.

8. The lithium secondary battery in accordance with any one of claims 1 to 3,

   wherein the non-aqueous electrolyte contains lithium ions and anions, and
   the anions include an oxalate complex anion.

9. A composite member comprising:

   a separator that has a first main surface and a second main surface that is opposite to the first main surface;
   a first spacer provided on the first main surface; and
   a second spacer provided on the second main surface,
   wherein T1/T2 that is a ratio of a thickness T1 of the first spacer relative to a thickness T2 of the second spacer is 1 or more.

10. The composite member in accordance with claim 9,
    wherein the ratio T1/T2 is 2 or more.

11. The composite member in accordance with claim 9 or 10,
    wherein the first spacer and the second spacer have different pattern shapes.

12. The composite member in accordance with claim 9 or 10,
    wherein at least one of the first spacer and the second spacer has a mesh-shaped pattern.

13. The composite member in accordance with claim 12,
    wherein the mesh-shaped pattern is composed of a collection of polygons.

14. The composite member in accordance with claim 13,
    wherein the mesh-shaped pattern has a honeycomb shape.

FIG. 1

## FIG. 2(a)

## FIG. 2(b)

FIG. 3

*FIG. 4*

FIG. 5

*FIG. 6(a)*　　　　　　　　*FIG. 6(b)*

*FIG. 7(a)*

52s

52

11

52s

52

52s

12

13

*FIG. 7(b)*

53

52

53

11

13

53

52

53

12

12a

FIG. 8

## INTERNATIONAL SEARCH REPORT

| International application No. |
|---|
| **PCT/JP2023/019780** |

### A. CLASSIFICATION OF SUBJECT MATTER

***H01M 10/052***(2010.01)i; ***H01M 4/134***(2010.01)i; ***H01M 10/0568***(2010.01)i; ***H01M 10/058***(2010.01)i; ***H01M 50/451***(2021.01)i; ***H01M 50/457***(2021.01)i; ***H01M 50/46***(2021.01)i; ***H01M 50/463***(2021.01)i; ***H01M 50/489***(2021.01)i

FI: H01M10/052; H01M4/134; H01M10/0568; H01M10/058; H01M50/451; H01M50/457; H01M50/46; H01M50/463 B; H01M50/489

According to International Patent Classification (IPC) or to both national classification and IPC

### B. FIELDS SEARCHED

Minimum documentation searched (classification system followed by classification symbols)

H01M10/052; H01M4/134; H01M10/0568; H01M10/058; H01M50/451; H01M50/457; H01M50/46; H01M50/463; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/045127 A1 (PANASONIC INTELLECTUAL PROPERTY MANAGEMENT CO., LTD.) 03 March 2022 (2022-03-03) claims, paragraphs [0032]-[0044], [0051], [0059], [0082]-[0085] | 1-2, 5-9, 12-14 |
| A | | 3-4, 10-11 |
| A | WO 2020/066254 A1 (PANASONIC INTELLECTUAL PROPERTY MANAGEMENT CO., LTD.) 02 April 2020 (2020-04-02) | 1-14 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<table>
<tr><td colspan="4" align="center">INTERNATIONAL SEARCH REPORT<br>Information on patent family members</td><td colspan="2">International application No.<br><br>**PCT/JP2023/019780**</td></tr>
<tr><td colspan="2" align="center">Patent document<br>cited in search report</td><td align="center">Publication date<br>(day/month/year)</td><td colspan="2" align="center">Patent family member(s)</td><td align="center">Publication date<br>(day/month/year)</td></tr>
<tr><td>WO</td><td>2022/045127  A1</td><td>03 March 2022</td><td>CN</td><td>115885404      A</td><td></td></tr>
<tr><td>WO</td><td>2020/066254  A1</td><td>02 April 2020</td><td>US</td><td>2021/0265617  A1</td><td></td></tr>
<tr><td></td><td></td><td></td><td>EP</td><td>3859856      A1</td><td></td></tr>
<tr><td></td><td></td><td></td><td>CN</td><td>112673504      A</td><td></td></tr>
</table>

Form PCT/ISA/210 (patent family annex) (January 2015)

**REFERENCES CITED IN THE DESCRIPTION**

**Patent documents cited in the description**

• JP 2019212603 A